# EUROPEAN PATENT APPLICATION

(11) **EP 4 671 843 A1**
(43) Date of publication of application: **31.12.2025**
(21) Application number: 24184158.4
(22) Date of filing: 25.06.2024
(51) Int. Cl.: G02B 21/00, G02B 21/36, G01J 3/12, G01J 3/36, G02F 1/33

(54) **DETECTION ARRANGEMENT, CASCADED DETECTION ARRANGEMENT, AND OPTICAL SCANNING MICROSCOPE**

(71) Applicant: Leica Microsystems CMS GmbH, 35578 Wetzlar (DE)
(72) Inventor: Krishnamachari, Vishnu Vardhan, 35578 Wetzlar (DE); Walter, Kai, 35578 Wetzlar (DE); Friedrich, Lars, 35578 Wetzlar (DE)
(74) Representative: Schaumburg und Partner Patentanwälte mbB

(57) **Abstract**

A detection arrangement (102) for an optical scanning microscope (100) comprises a first and second beam path (130b) comprising an array detector each. The detection arrangement (102) also comprises an acousto-optical device (1200, 1402, 1404) configured to receive descanned detection light (118), to direct a first part (128a) of the detection light (118) into the first beam path (130a), to direct a second part (128b) of the detection light (118) into the second beam path (130b), and to direct a remaining part (132) of the detection light (118) into a third beam path (130c). The first part and the second part (128b) of the detection light (118) comprise at least one selected wavelength range determined by at least one frequency of acoustic waves generated by a transducer (126) of the acousto-optical device (1200, 1402, 1404). The detection arrangement (102) further comprises a control unit (134) configured to control the transducer (126) of the acousto-optical device (1200, 1402, 1404) for determining the at least one selected wavelength range.

## Description

### Technical field

The invention relates to a detection arrangement for an optical scanning microscope, and to a cascaded detection arrangement for an optical scanning microscope. The invention further relates to an optical scanning microscope.

### Background

Image Scanning Microscopy (ISM) is an advanced fluorescence microscopy technique that improves the spatial resolution and signal-to-noise ratio beyond the capabilities of traditional confocal microscopy. In conventional confocal microscopy, a single point detector, such as a single photomultiplier tube, is used to detect the fluorescent light emitted from the sample. In the ISM approach, the point detector is replaced by a multi-element photodetector comprising a plurality of photodetector elements (pixels) arranged in a photodetector array. Each photodetector element in the array is configured to output a detector signal upon receiving fluorescent light. As the sample is scanned with a laser focus, each photodetector element detects a small image of the illuminated sample at each scan position. Appropriate algorithms are then used to combine multiple scan images to reconstruct a single high-resolution image of the sample.

While it is possible to use the information from the different photodetector elements to increase spatial image resolution and signal-to-noise ratio, one of the major limitations of current ISM is the limited usability of these photodetectors for quantifying the emitted fluorescence light in terms of its spectral content. Existing solutions, for example as described in F. Strasser et al., Biomed. Opt. Expr 10 (2019) 2513, are limited to a narrow band of the visible light spectrum and suffer from light loss due to the generation of higher diffraction orders and the use of only one polarization state.

### Summary

It is an object to provide a detection arrangement for an optical scanning microscope, a cascaded detection arrangement for an optical scanning microscope, and an optical scanning microscope that enable spectral imaging with high spatial resolution and a high signal-to-noise ratio. In particular, it is an object to improve the limited usability of these photodetectors for quantifying the emitted fluorescence light in terms of its spectral content of current Image Scanning Microscopes.

The aforementioned object is achieved by the subject-matter of the independent claims. Advantageous embodiments are defined in the dependent claims and the following description.

The proposed detection arrangement for an optical scanning microscope comprises a first beam path comprising a first array detector. The detection arrangement also comprises an acousto-optical device configured to receive descanned detection light and to direct a first part of the detection light into the first beam path. The first part of the detection light comprises at least one selected wavelength or at least one selected wavelength range determined by at least one frequency of acoustic waves generated by a transducer of the acousto-optical device. A control unit is configured to control the transducer of the acousto-optical device for determining the at least one selected wavelength or the at least one selected wavelength range.

The acousto-optical device may be configured to generate only one diffraction order, for example as an isotropic-diffraction based acousto-optic device. In such a device, both polarizations of a given wavelength range or a given wavelength are diffracted into a single diffraction order. Thus, there will be one angularly dispersed diffracted output and a zero-order transmitted output, for example a remaining part of the detection light. Such an acousto optical device might be an acousto optical deflector (AOD).

Preferably, the detection arrangement also comprises a second beam path comprising a second array detector. The acousto-optical device may be configured to direct a second part of the detection light into the second beam path. The second part of the detection light may comprise at least one selected wavelength range or at least one selected wavelength determined by at least one frequency of acoustic waves generated by the transducer of the acousto-optical device.

When an unpolarized light beam hits the acousto-optical device, light in the wavelength range determined by the radio frequency or radio frequencies applied to the transducer is deflected in to two beams, each beam having one of two orthogonal polarizations. These two light beams are also called diffracted beams or the +1 and -1 diffraction orders. The remaining light passes the acousto-optical device essentially without being diffracted. This remaining light is also referred to as the zeroth-order beam. The descanned detection light will typically correspond to the image of a small particle, which emits the detection light, for example fluorescence light, as a result of being scanned with a beam of focused excitation light, such as a laser focus used to excite fluorophores. Such a particle may be seen as a point-like source of the detection light. The detection light is typically unpolarized, for example fluorescence light is typically unpolarized.

In the proposed detection arrangement, the acousto-optical device is used to generate two diffracted beams comprising the first and second parts of the detection light, respectively. Each of the two parts comprises light in the wavelength range determined by the at least one radio frequency applied to the transducer and is of one of the two orthogonal polarizations. The remaining part of the detection light passes the acousto-optical device as the zeroth-order beam and is directed into the third beam path. The relative angle of the diffracted beams with respect to the zeroth-order beam increases as the wavelength of the diffracted light decreases. On the other hand, if the detection light undergoes a small shift in the angle of incidence, then the angle change of the diffracted beams with respect to the zeroth-order beam occurs in the opposite direction. This means that if the angle enclosed by the zeroth-order beam and the +1 diffraction order beam increases, the angle enclosed by the -1 diffraction order beam and the zeroth-order beam decreases. The increase or decrease of the relative angle is detected as a change in the position at which the diffracted beams hit the array detectors, which may be two-dimensional arrays of photodetector elements. The asymmetry between the changes in the relative angle can be used to infer whether the angle of incidence or the wavelength of the detection light changed. For example, a numerical back-calculation of the optical system of the optical scanning microscope may be used to determine the three-dimensional position and the wavelength of the detection light source in the sample space. Thereby, the proposed detection arrangement not only enables image scanning microscopy with high spatial resolution and a high signal-to-noise ratio by detecting the detection light using the two array detectors. The proposed detection arrangement also enables to reconstruct a spectral information about the detection light without the significant loss of detection light, which would compromise the signal-to-noise ratio. Further, the acousto-optical device may be used to limit the wavelength range that reaches the first and second array detectors such that the wavelength range of the excitation light is excluded. This prevents the excitation light from being detected by the array detectors, which could form a strong background leading to the false or incomplete extraction of actual fluorescence signals. Since the wavelength range can be dynamically limited based on the currently used excitation light, this increases the choice of excitation wavelengths, increasing the flexibility of the detection arrangement.

The detection arrangement is configured to receive the detection light from a descanned arrangement and may therefore be used as the detection arrangement on an existing confocal laser scanning microscope or image scanning microscope, for example.

In an embodiment a remaining part of the detection light is directed into a third beam path. The third beam path may comprise a detector element, in particular a third array detector or a non-array-detector. The third beam path may also comprise a focusing element configured to focus the remaining part of the detection light onto the detector element. The non-array detector is preferably a non-imaging detector, also called single-pixel detector, for example a photomultiplier tube (PMT), a photodiode, an avalanche photodiode (APD), or a hybrid detector that combines the high sensitivity of photomultiplier tubes with the low noise and high quantum efficiency of avalanche photodiodes. The third array detector may be used to perform image scanning microscopy without a reconstruction of a spectral information from the remaining detection light. This may be used to supplement the information provided by the first and second array detectors. For example, since the remaining detection light is not diffracted, a change in the position at which the remaining detection light, i.e. the zeroth-order beam, hits the third array detector is only due to a change of the angle of incidence of the detection light. Thus, a movement of the image of the remaining detection light on the third array detector may be used to isolate the movement caused by a color change of the first and second detection light on the first and second array detectors, respectively.

In another embodiment the third beam path comprises a beam dump. In such an embodiment, the remaining detection light is discarded. The beam dump safely absorbs and dissipates the remaining detection light and any leaked excitation light to prevent damage to the detection arrangement. Preferably, the beam dump is configured to be removeable. This way, the beam dump may be replaced by the detector element.

In another embodiment the third beam path comprises a pinhole arranged before the detector element. In this embodiment, the detector element arranged in the third beam path is preferably the non-array-detector. Such a configuration comprising the pinhole and the non-array-detector enables the detection arrangement to be used for confocal microscopy. This makes it possible to extract information from the remaining detection light that is complementary - with respect to the wavelengths - to the information extracted from the first and second parts of the detection light. Alternatively, the acousto-optical device may be operated such that the detection light passes the acousto-optical device unaffected, and the detection arrangement may be used to perform confocal microscopy using the detection light.

In another embodiment the detector element is a spectrally resolving detector element. This makes it possible to extract spectral information from the remaining detection light that may complement the spectral information obtained by the first and second array detectors. An exemplary spectrally resolving detector element is disclosed by US 5,886,784 A.

In another embodiment the detection arrangement comprises a pinhole arranged in front of the acousto-optical device. In this embodiment, the pinhole is arranged before the acousto-optical device as seen in the propagation direction of the detection light, i.e. the detection light passes the pinhole before reaching the acousto-optical device. The pinhole blocks out of focus light and scatter light from reaching the acousto-optical device.

In another embodiment the first beam path comprises at least one first beam deflecting element, in particular a first dispersive element configured to spectrally separate the first part of the detection light. Alternatively, or additionally, the second beam path comprises at least one second beam deflecting element, in particular a second dispersive element configured to spectrally separate the second part of the detection light. The angle enclosed by the two diffracted beams comprising the first and second parts of the detection light may be too small to be able to arrange the array detectors in such a way that the surface of the array detectors is used as efficiently as possible. The beam deflecting elements may be used to deflect the first and second parts of the detection light onto the first and second array detectors, thereby optimizing or utilizing the spatial arrangement of the detection arrangement. Additionally, the dispersive elements may be used to increase the difference in deflection angles between different wavelengths, thereby making the change in angle more pronounced. This not only uses the surface of the array detectors more efficiently, but also makes it easier to detect a change in color. For example, the dispersion of the dispersive elements may be chosen such that the net dispersion provided by the acousto-optical device and the dispersive elements enable wavelengths in the range of 400 nm to 850 nm to cover the entire surface of the array detectors.

In another embodiment at least one of the first dispersive element and the second dispersive element comprise at least one dispersing prism. Dispersion prisms work with light in a broad wavelength range that includes the visible spectrum and part of the infrared and ultraviolet spectrum. Further, dispersing prisms do not generate higher orders of diffraction that can occur with diffraction gratings. The higher orders may not be picked up by the array detectors. Thus, using dispersing prisms prevents light loss and improves the signal to noise ratio.

In another embodiment the detection arrangement comprises a detector element having a first region forming at least part of the first array detector, and a second region forming at least part of the second array detector. The first beam path may comprise at least one first reflective element configured to direct the first part of the detection light onto the first region of the detector element. The second beam path may comprise at least one second reflective element configured to direct the second part of the detection light onto the second region of the detector element. In this embodiment, the first and second array detectors are realized by the single detector element. The first array detector is realized by the first region of the detector element and the second array detector is realized by the second region of the detector element. Such an optical arrangement can be made especially compact, minimizing the overall footprint of the detection arrangement. The use of the single detector element may also be more cost effective than using two dedicated array detectors.

In another embodiment the first beam path comprises at least one first focusing element configured to focus the first part of the detection light onto the first array detector. Alternatively, or additionally, the second beam path comprises at least one second focusing element configured to focus the second part of the detection light onto the second array detector. The first focusing element may be used to form an image on the first array detector from the first part of the detection light. For example, the image may be an image of the point-like source of the detection light. From a collection of these images corresponding to different scan positions each a single high-resolution image of the sample may be reconstructed using the appropriate algorithms. Likewise, the second focusing element may be used to form an image on the second array detector from the second part of the detection light. Alternatively, at least one focusing element may be arranged upstream of the acousto-optical device in order to focus the first part of the detection light onto the first array detector and to focus the second part of the detection light onto the second array detector.

The invention also relates to a cascaded detection arrangement. The cascaded detection arrangement comprises at least two of the detection arrangements described above, which are arranged in sequence. Each detection arrangement except a first detection arrangement is arranged in the third beam path of the preceding detection arrangement.

In the cascaded detection arrangement, the remaining part of the detection light of a preceding detection arrangement takes the role of the detection light in the subsequent detection arrangement. State of the art acousto-optical devices may separate up to eight different wavelength ranges. Thus, using a single detection arrangement up to eight different wavelength ranges may be investigated at the same time. The cascaded detection arrangement makes it possible to increase this number. In addition to that, the cascaded detection arrangement has the same advantages as the detection arrangement described above. In particular, the cascaded detection arrangement may be supplemented with the features described in this document in connection with the detection arrangement. Furthermore, the detection arrangement and the cascaded detection arrangement described above may be supplemented with the features described in this document in connection with the cascaded detection arrangement.

The invention further relates to an optical scanning microscope. The optical scanning microscope comprises an excitation light source configured to generate excitation light, and an objective lens directed at a sample space and configured to direct the excitation light into the sample space and to receive the detection light from the sample space. The optical scanning microscope also comprises a scanning unit arranged along a beam path between the excitation light source and the objective lens and configured to selectively direct the excitation light into different regions of the sample space via the objective lens, and the detection arrangement or the cascaded detection arrangement described above. The optical scanning microscope further comprises a main beam splitter configured to direct the excitation light into the objective lens via the scanning unit, and to direct the detection light into the detection arrangement or the cascaded detection arrangement.

The optical scanning microscope has the same advantages as the detection arrangement and the cascaded detection arrangement described above. In particular, the optical scanning microscope may be supplemented with the features described in this document in connection with the detection arrangement and/or the cascaded detection arrangement. Furthermore, the detection arrangement and the cascaded detection arrangement described above may be supplemented with the features described in this document in connection with the optical scanning microscope.

In an embodiment the main beam splitter comprises at least one of an acousto-optical beam splitter and a dichroic beam splitter. The acousto-optical beam splitter may be configured to receive the descanned detection light and to selectively direct a part of the detection light into the detection arrangement (or the cascaded detection arrangement) and to direct a further part of the detection light not into the detection arrangement. The excitation light may be reflected in the sample space and by passing the main beam splitter leak into the detection arrangement. Like the acousto optical device of the detection arrangement, the acousto-optical beam splitter can be controlled to selectively deflect certain wavelengths or wavelength bands. This property may be used in this embodiment to deflect the leaked excitation light away from the detection arrangement. Alternatively, a dichroic beam splitter may be used.

In another embodiment, the excitation light source comprises a super-continuum laser. The excitation light source may further comprise exchangeable filters or an acousto-optical device to select specific wavelengths from the laser light generated by the super-continuum laser as the excitation light. In this embodiment, it is possible to dynamically generate laser light with multiple different wavelengths as the excitation light. This makes it possible to adapt the excitation light to the excitation spectra of many different fluorophores, making the optical scanning microscope even more versatile. In addition, or as an alternative to the super-continuum laser, the excitation light source may comprise multiple single-wavelength lasers.

### Short Description of the Figures

Hereinafter, specific embodiments are described referring to the drawings, wherein:
- Figure 1: is a schematic view of an optical scanning microscope comprising a detection arrangement according to an embodiment;
- Figure 2: is a schematic view of the detection arrangement according to an embodiment comprising an additional detector element;
- Figure 3: is a schematic view of the detection arrangement according to another embodiment, wherein the additional detector element is an array detector;
- Figure 4: is a schematic view of the detection arrangement according to another embodiment comprising a beam dump;
- Figure 5: is a schematic view of the detection arrangement according to another embodiment comprising beam deflecting elements;
- Figure 6: is a schematic view of the positions of different focal spots on array detectors of the detection arrangement according to Figure 5;
- Figure 7: is a graph of the relative positions of the focal spots for different wavelengths for the detection arrangement according to Figure 5;
- Figure 8: is a graph of the relative positions of the focal spots for different radio frequencies applied to a transducer of an acousto-optical device of the detection arrangement according to Figure 5;
- Figure 9: is a graph of the wavelength deflected by the acousto-optical device for different radio frequencies applied to the transducer of the acousto-optical device of the detection arrangement according to Figure 5;
- Figure 10: is a graph of the relative positions of focal spots corresponding to a wavelength of 540 nm for different tilt angles of incident detection light for the detection arrangement according to Figure 5;
- Figure 11: is a graph of the relative positions of focal spots corresponding to a wavelength of 440 nm for different tilt angles of incident detection light for the detection arrangement according to Figure 5;
- Figure 12: is a schematic top view of the detection arrangement according to another embodiment comprising a detector element that forms two array detectors;
- Figure 13: is a schematic perspective view of the detection arrangement according to Figure 12;
- Figure 14: is a schematic view of a cascaded detection arrangement according to an embodiment; and
- Figure 15: is a schematic view of the detection arrangement according to another embodiment comprising only one beam path.

### Detailed Description

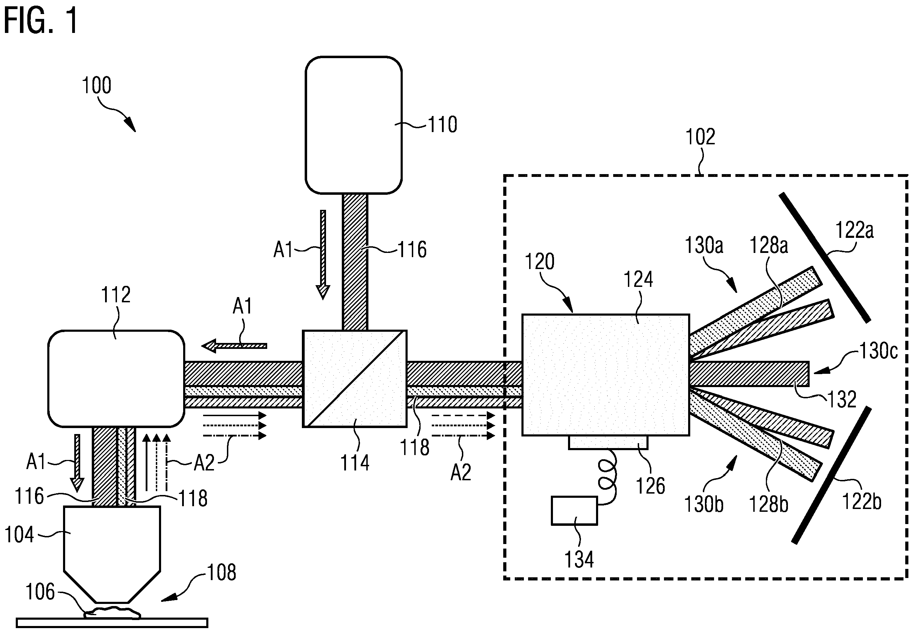

Figure 1 is a schematic view of an optical scanning microscope 100 comprising a detection arrangement 102 according to an embodiment. The optical scanning microscope 100 exemplary comprises a single objective lens 104 directed at a sample 106 arranged in a sample space 108. The optical scanning microscope 100 further comprises an excitation light source 110, a scanning unit 112, and a main beam splitter 114.

The excitation light source 110 is configured to generate excitation light 116, in particular excitation light 116 comprising one or more single wavelengths or narrow wavelength bands. The excitation light source 110 may comprise one or more lasers to generate laser light as the excitation light 116. In particular, the excitation light source 110 may comprise a continuum laser and an arrangement of exchangeable filters or a tunable laser to selectively generate excitation light 116 with different wavelengths. The excitation light source 110 may comprise further optical elements such as lenses and apertures (not shown in Figure 1) for forming a beam from the excitation light 116. The excitation light 116 generated by the excitation light source 110 is directed by the main beam splitter 114 towards the scanning unit 112. The scanning unit 112 is configured to deflect the excitation light 116 to selectively direct the excitation light 116 into different regions of the sample space 108 via the objective lens 104. This makes it possible to scan the sample 106 using the excitation light 116 focused by the objective lens 104. To deflect the excitation light 116, the scanning unit 112 may comprise one or more galvanometric mirrors or acousto-optical deflectors, for example. Arrows A1 in Figure 1 indicate the beam path and the light propagation direction of the excitation light 116.

By illuminating the sample 106 using the excitation light 116 detection light 118 is generated. In Figure 1 it is assumed purely as an example that the detection light 118 is unpolarized fluorescence light originating from two different species of fluorophores. Thus, the detection light comprises two different components, each component having a different wavelength range. The detection light 118 is collected by the objective lens 104 and directed back towards the main beam splitter 114 via the scanning unit 112. Due to the arrangement of the scanning unit 112 between the main beam splitter 114 and the objective lens 104, the deflection of the excitation light 116 is reversed for the detection light 118. This directs the detection light 118 towards a single point regardless of a deflection angle of the scanning unit 112. The detection light 118 has been descanned, so to speak. The descanned detection light 118 is then directed by the main beam splitter 114 into the detection arrangement 102. Arrows A2 in Figure 1 indicate the beam path and the light propagation direction of the two different components of the detection light 118 (as well as for example excitation light being reflected at the sample) originating at the sample 106.

The detection arrangement 102 comprises an acousto-optical device 120, a first array detector 122a, and a second array detector 122b. The detection light 118 is received by the detection arrangement 102 via the acousto-optical device 120 comprising an acousto-optical medium 124, and a transducer 126. The acousto-optical device 120 splits the incident detection light 118 into one or more pairs of beams, which are also called diffraction orders. Each beam pair contains light of a wavelength range determined by one of the radio frequencies applied to the transducer 126, while each beam in each pair is of one of two orthogonal polarizations. When a radio frequency is applied to the transducer 126, the transducer 126 generates sound waves in the acousto-optical medium 124. These soundwaves locally modulate the refractive index in of the acousto-optical medium 124. This modulation of the refractive index effectively creates a refractive grating in the acousto-optical medium 124 whose properties are determined by the radio frequency applied to the transducer 126. This refractive grating causes the diffraction of the incident detection light 118 into the diffraction orders based on the frequency and amplitude of the acoustic waves, and thus the radio frequency applied to the transducer 126. The radio frequency applied to the transducer 126 may be controlled using a control unit 134, which in turn can be used to control which wavelength range or ranges are deflected by the acousto-optical device 120.

In Figure 1, two beam pairs are generated, one beam pair for each component of the detection light 118. First beams of each beam pair are called the +1 diffraction order beams and have a first polarization. The +1 diffraction order beams form a first part 128a of the detection light 118 that is deflected up in Figure 1 into a first beam path 130a comprising the first array detector 122a. Second beams of each beam pair are called the -1 diffraction order beams and have a second polarization that is orthogonal to the first polarization. The -1 diffraction order beams form a second part 128b of the detection light 118 that is deflected down in Figure 1 into a second beam path 130b comprising the second array detector 122b. A remaining part 132 of the detection light 118 is called the zeroth-order beam. The zeroth-order beam passes the acousto-optical device 120 and is directed into a third beam path 130c.

The first and second parts 128a, 128b of the detection light 118 are received by the array detectors 122a, 122b. Since both diffraction orders and therefore both polarization directions of the detection light 118 are detected, the detection arrangement 102 can operate without the significant loss of detection light 118, at least for this particular selected wavelength range of the detection light 118. Each of the array detectors 122a, 122b comprises an array of photodetector elements, preferably a two-dimensional array of photodetector elements, for example photodiodes such as single-photon avalanche diodes (SPAD), or photomultiplier tubes (PMT), such as gallium arsenide phosphide (GaAsP) photomultiplier tubes. Each photodetector element acts as a single pixel detector that captures part of the detection light 118 at a different position in the array. Thus, the array detectors 122a, 122b make it possible to detect the spatial distribution of the intensity of the detection light 118. As the sample 106 is scanned with the excitation light 116, at least one spatial distribution is detected at each scan position by each of the array detectors 122a, 122b. From the collection of the spatial distributions a single high-resolution image of the sample 106 can be reconstructed, for example using pixel reassignment. Even though not explicitly shown in Figure 1, a focusing element, for example a lens may be arranged in the first beam path 130a in order to focus the first part 128a of the detection light 118 onto the first array detector 122a. Accordingly, a further focusing element might be arranged in the second beam path 130a in order to focus the second part 128b of the detection light 118 onto the second array detector 122b. This imaging technique is known as Image Scanning Microscopy (ISM), which can be applied in combination with conventional Confocal Laser-Scanning Microscopy (CLSM) and has an increased spatial resolution and signal-to-noise ratio compared to conventional Confocal Laser-Scanning Microscopy.

During scanning the sample 106, a single particle, for example a single fluorophore, may be imaged multiple times in consecutive steps. The angle at which the descanned detection light 118, for example emission light from an infinitesimally small fluorescent radiating particle, enters the acousto-optic device 120 depends on the relative position of the particle with respect to the center of the excitation spot. If the particle is at the center of the excitation spot (excitation Airy disc), then the descanned detection light 118 propagates parallel to descanned reflected excitation light 116. On the other hand, if the particle is displaced from the center of the excitation spot, then the descanned emission (the detection light 118) propagates at a non-zero angle α with respect to the descanned reflected excitation light 116. In a chromatically corrected optical system, this angle between the descanned detection light 118 and the descanned reflected excitation light 116 is independent of the color of the detection or emission light 118.

Using the detection arrangement 100 shown Figure 1, one can decipher not only the relative position of the radiating particle with respect to the center of the excitation spot but also the color of emission radiation of the particle. For a given wavelength of emission propagating along the reflected excitation light direction, i.e. α = 0, from the geometry of acousto-optic arrangement, there is a specific angle at which the two diffraction orders appear at the output of the acousto-optic device 120. To put it differently, for a given emission wavelength of the detection light 118, there is a nominal angle between the zeroth-order beam and the +1 diffraction order beam and a nominal angle between the zeroth-order beam and the -1 diffraction order beam.

When α is non-zero, the angle enclosed by the zeroth-order beam and the +1 diffraction order beams increases (or decreases), and the angle enclosed by the -1 diffraction order beams and the zeroth-order beam decreases (or increases).

It is worth mentioning that in scanning microscopy usually the infinitesimally small fluorescent radiating particle is excited by a scanned excitation light beam and usually the infinitesimally small fluorescent radiating particle has a stationary localization. However, the same consideration as mentioned above apply for the detection light, even after the detection light is descanned, because these considerations depend on the relative position between the localization of the excitation spot and the localization of the infinitesimally small fluorescent radiating particle as a function of time during the scanning.

On the other hand, if the wavelength of emission from the infinitesimally small particle undergoes a change, then the angle enclosed by the zeroth-order beam and the +1 diffraction order beams increases (or decreases), and the angle enclosed by the -1 diffraction order beams and the zeroth-order beam increases (or decreases).

If focusing lenses are used to focus the outgoing diffracted beams from the acousto-optic device onto the respective array detectors, in both the afore-mentioned scenarios, the changes in the enclosed angles are registered as a movement of the image of the single particle on the array detectors 122a, 122b. By distinguishing these two types of movement it is possible to extract spectral information, expanding the capabilities of the ISM technique.

The detection light 118 may comprise fluorescence light generated by fluorophores that were excited by the excitation light 116. However, the detection light 118 may also comprise small amounts of excitation light 116, which have been reflected in the sample space 108, for example. This excitation light 116 may leak through the main beam splitter 114 into the detection arrangement 102, or, in other words, leak into the detection arrangement 102. In order to address this issue, the main beam splitter 114 may comprise an acousto-optical beam splitter.

The acousto-optical beam splitter is used to selectively deflect a part of the detection light 118 away from the detection arrangement 102, for example by directing the part of the detection light 118 into a beam dump or away from an opening of a pinhole. For example, wavelengths of the excitation light 116 may be deflected away from the detection arrangement 102, thereby preventing the excitation wavelength from leaking into the detection arrangement 102. Similarly, the acousto-optical device 120 may be operated to let only detection light 118 in one or more predetermined wavelength ranges are deflected onto the array detectors 122a, 122b, for example selected ranges of the emission wavelengths of one or more specific fluorophores arranged in the sample 106.

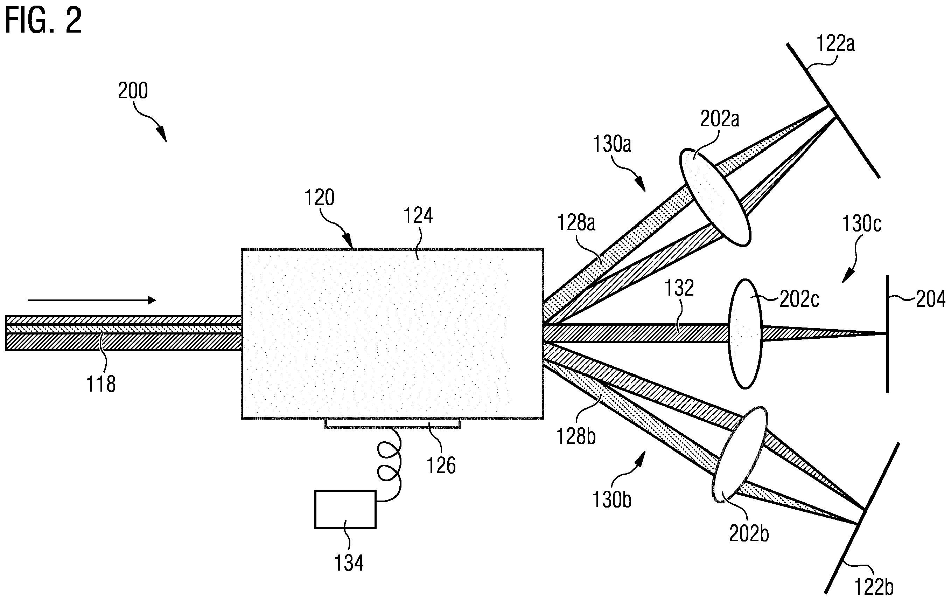

Figure 2 is a schematic view of the detection arrangement 200 according to an embodiment. The detection arrangement 200 according to Figure 2 is distinguished from the detection arrangement 100 according to Figure 1 in comprising additional focusing elements 202a, 202b that are arranged in the first and second beam paths 130a, 130b. A first focusing element 202a is arranged in the first beam path 130a and focusses the first part 128a of the detection light 118 onto the first array detector 122a, thereby generating an image of the source of the detection light 118, for example. Likewise, a second focusing element 202b is arranged in the second beam path 130b and focusses the second part 128b of the detection light 118 onto the second array detector 122b. As the sample 106 is scanned with the excitation light 116, at least one image is captured at each scan position by each of the array detectors 122a, 122b. From these images the single high-resolution image of the sample 106 can be reconstructed using the appropriate algorithms known from Image Scanning Microscopy, for example pixel reassignment.

The detection arrangement 200 according to Figure 2 further comprises a third focusing element 202c and a detector element 204 arranged in the third beam path 130c. The third focusing element 202c is configured to focus the remaining part 132 of the detection light 118 onto the detector element 204. The detector element 204 may be a third array detector, enabling the detection arrangement 200 to perform Image Scanning Microscopy using the remaining detection light 132. Further, the acousto-optical device 120 may be operated such that all of the detection light 118 is directed in to the third beam path 130c. This makes it possible to also use the detection arrangement 200 for traditional Image Scanning Microscopy without extracting any spectral information.

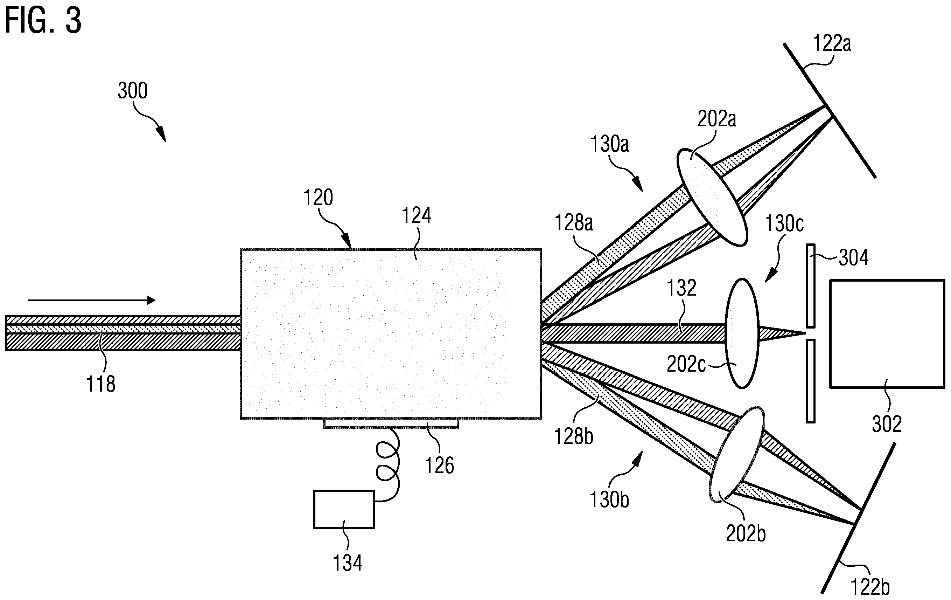

Figure 3 is a schematic view of the detection arrangement 300 according to another embodiment. The detection arrangement 300 according to Figure 3 is distinguished from the detection arrangement 200 according to Figure 2 in that the detector element 302 is a non-array-detector, and in that a pinhole 304 is arranged before the detector element 302.

In this embodiment, the detection arrangement 300 is configured to perform confocal imaging using the remaining detection light 132. This makes it possible to perform Image Scanning Microscopy and Confocal Imaging at the same time using the detection arrangement 300. As in the embodiment described above with reference to Figure 2, the acousto-optical device 120 may also be operated such that all of the detection light 118 is directed in to the third beam path 130c. Thereby, a user may selectively use the detection arrangement 300 for either Image Scanning Microscopy or Confocal Imaging. The detector element 302 may be a spectrally resolving detector element 302. This makes it possible to use the detection arrangement 300 for spectrally resolved Confocal Imaging as well.

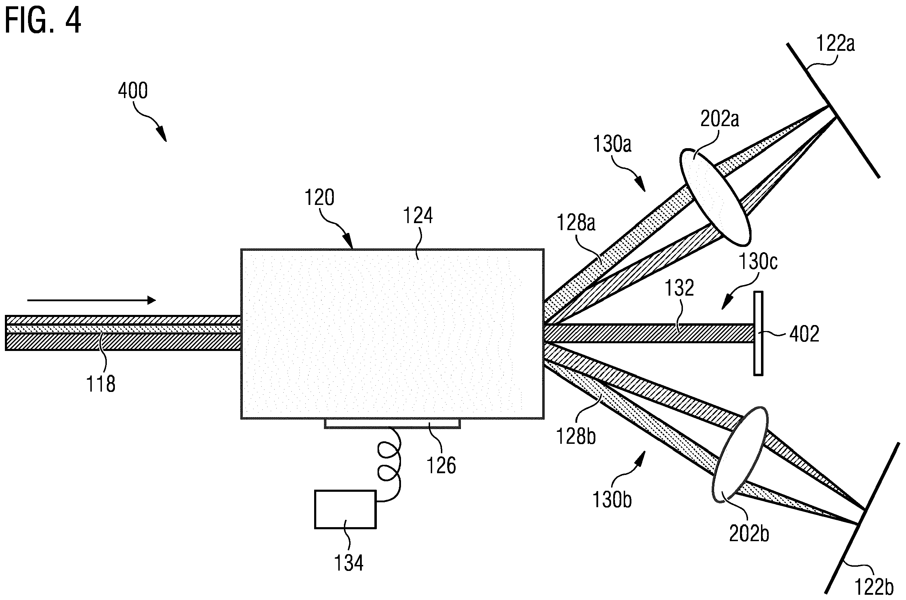

Figure 4 is a schematic view of the detection arrangement 400 according to another embodiment. The detection arrangement 400 according to Figure 4 is distinguished from the detection arrangement 200 according to Figure 2 in that the third beam path 130c comprises a beam dump 402. In this embodiment, the remaining detection light 132, i.e. the detection light 118 not captured by the first and second array detectors 122a, 122b, is discarded by directing it into the beam dump 402, where it is absorbed and dissipated.

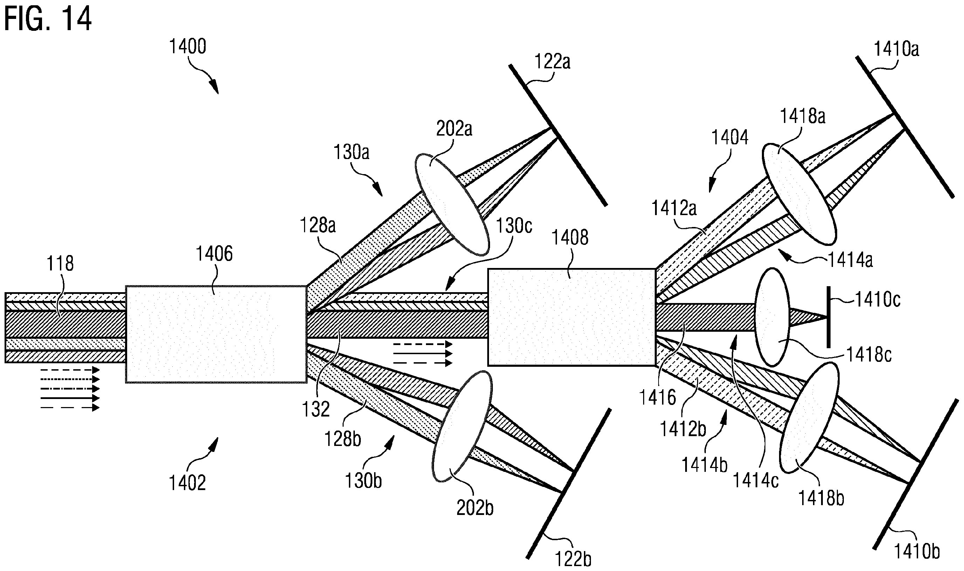

The detector elements 204, 302 (shown in Figures 2 and 3, respectively), and the beam dump 402 arranged in the third beam path 130c may be removeable, allowing them to be replaced by the beam dump 402 or one of the detector elements 204, 302, respectively. The detector elements 204, 302, and the beam dump 402 may also be replaceable by another detection arrangement 102, 200, 300, thereby forming a cascaded detection arrangement 1400, which is described below with reference to Figure 14.

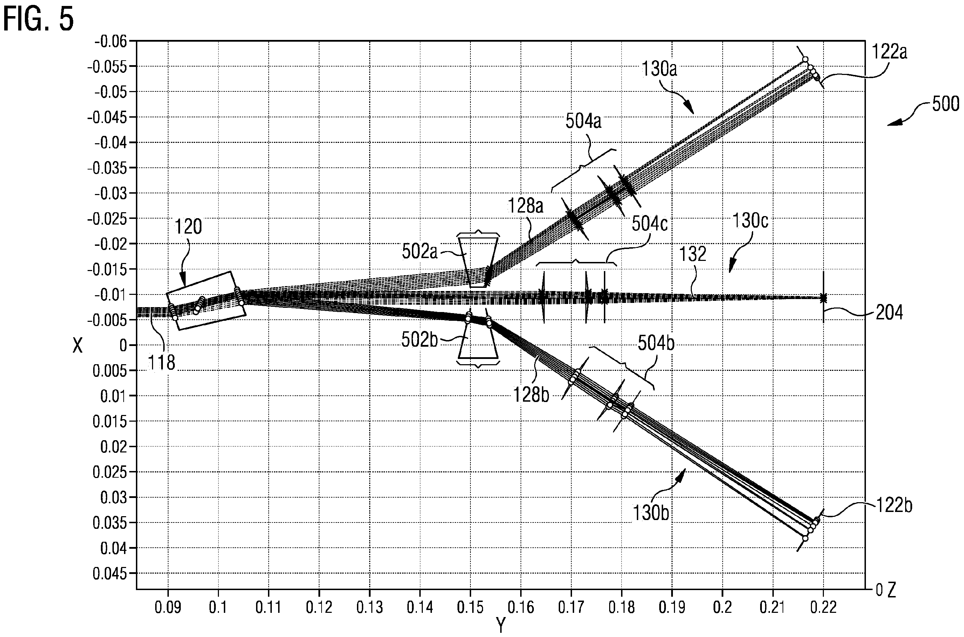

Figure 5 is a schematic view of the detection arrangement 500 according to another embodiment. The detection arrangement 500 according to Figure 5 is distinguished from the detection arrangement 200 according to Figure 2 in that the first and second beam paths 130a, 130b comprise beam deflecting elements 502a, 502b.

A first beam deflecting element 502a is arranged in the first beam path 130a and deflects the first part 128a of the detection light 118 away from the third beam path 130c. The first beam deflecting element 502a is exemplary formed as a dispersive element, more specifically as a first dispersive prism. A second beam deflecting element 502b is arranged in the second beam path 130b and deflects the second part 128b of the detection light 118 away from the third beam path 130c. Like the first beam deflecting element 502a, the second beam deflecting element 502b is exemplary formed as a dispersive element, more specifically as a second dispersive prism. Since the deflecting elements 502a, 502b are formed as dispersive prisms, they spectrally separate the first and second parts 128a, 128b of the detection light 118, making the spectral separation generated by the acousto-optical device 120 more pronounced. The dispersion generated by the dispersive prisms is chosen such that the net dispersion provided by the acousto-optical device 120 and the dispersive prisms 502a, 502b in the first and second beam paths 130a, 130b enables the wavelengths in the range of 400 nm to 850 nm to cover the entire surface of the first and second array detectors 122a, 122b, respectively.

In Figure 5, the first, second, and third beam paths 130a, 130b, 130c exemplary comprise three focusing elements 504a, 504b, 504c each, which are exemplary formed as lenses. First focusing elements 504a are arranged in the first beam path 130a between the first beam deflecting element 502a and the first array detector 122a. Likewise, second focusing elements 504b are arranged in the second beam path 130b between the second beam deflecting element 502b and the second array detector 122b. Third focusing elements 504c are arranged in the third beam path 130c between the acousto-optical device 120 and the detector element 302.

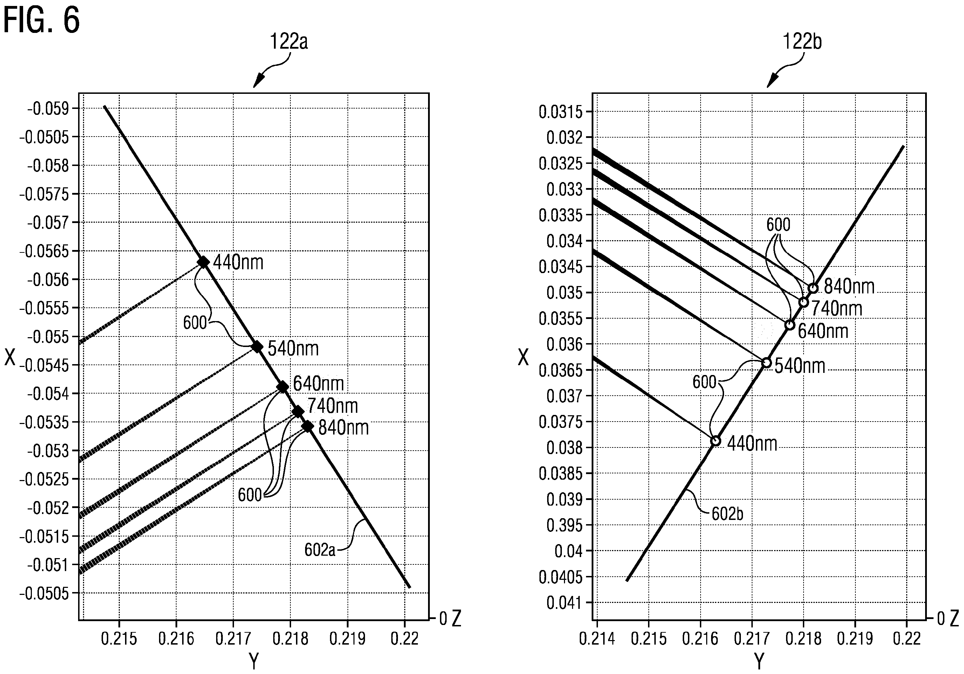

Figure 6 is a schematic of the position of different focal spots 600 on the first and second array detectors 122a, 122b of the detection arrangement 500 according to Figure 5. Each focal spot 600 corresponds to a different wavelength and is labelled accordingly. Since the first and second parts 128a, 128b of the detection light 118 are spectrally separated by the acousto-optical device 120 and the beam deflecting elements 502a, 502b, the different focal spots 600 are spatially separated on the surface of the array detectors 122a, 122b. The left side of Figure 6 shows the surface of the first array detector 122a. The right side of Figure 6 shows the surface of the second array detector 122b. Each surface is shown in Figure 6 with a coordinate system that indicates the x-positions and y-positions of the focal points. On each surface, five focal spots 600 are shown, corresponding to wavelengths of 440 nm, 540 nm, 640 nm, 740 nm, and 840 nm, respectively. Each focal spot 600 is arranged on a diagonal 602a, 602b of the respective surface. As can be seen in Figure 6, the focal spots 600 are well-separated from each other, meaning that different wavelength can be clearly distinguished.

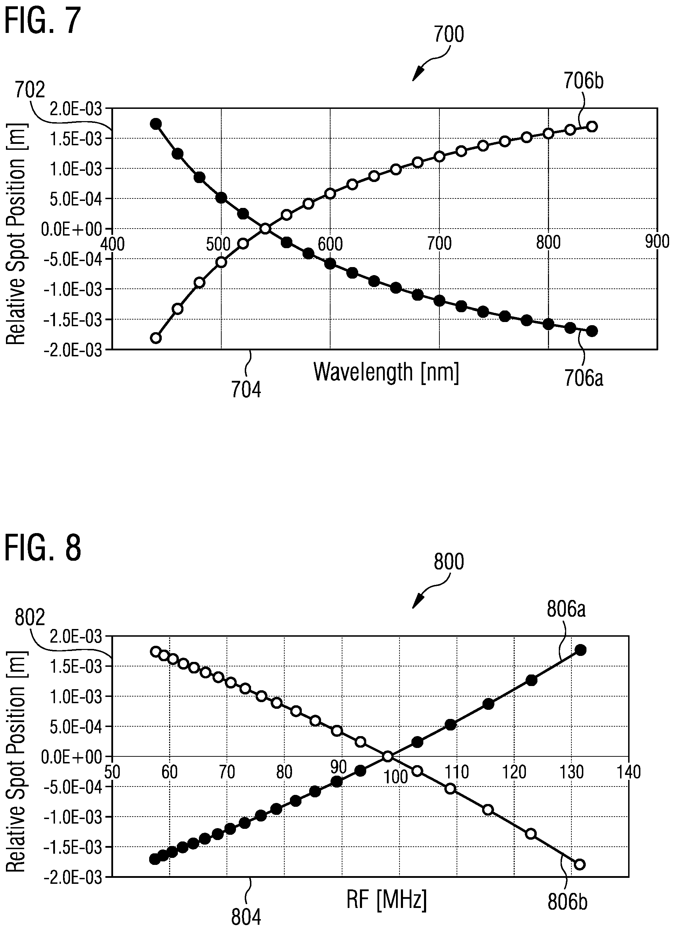

That the focal spots 600 are well-separated from each other can also be seen from Figure 7, which is a graph 700 with the relative positions of the focal spots 600 on the ordinate 702 and the wavelength on the abscissa 704 for the detection arrangement 500 according to Figure 5. The relative position is given in meters and the wavelength is given in nanometers. The position of the focal spot 600 corresponding to a wavelength of 540 nm has been chosen as the reference for the relative position. A first curve 706a interpolates the relative positions of the focal spots 600 on the first array detector 122a and a second curve 706b interpolates the relative positions of the focal spots 600 on the second array detector 122b. Both curves 706a, 706b flatten for longer wavelengths, meaning that the distance between focal spots 600 in this wavelength region is shorter than for short wavelengths.

Figure 8 is a graph 800 with the relative positions of the focal spots 600 on the ordinate 802 and the radio frequency applied to the transducer 126 of the acousto-optical device 120 on the abscissa 804 for the detection arrangement 500 according to Figure 5. The relative position is given in meters and the radio frequency is given in MHz. As in Figure 7, a first curve 806a interpolates the relative positions of the focal spots 600 on the first array detector 122a and a second curve 806b interpolates the relative positions of the focal spots 600 on the second array detector 122b. As can be seen in Figure 8, the relationship between the applied radio frequency and the relative positions of the focal spots 600 is almost linear in the range of radio frequencies shown in Figure 8.

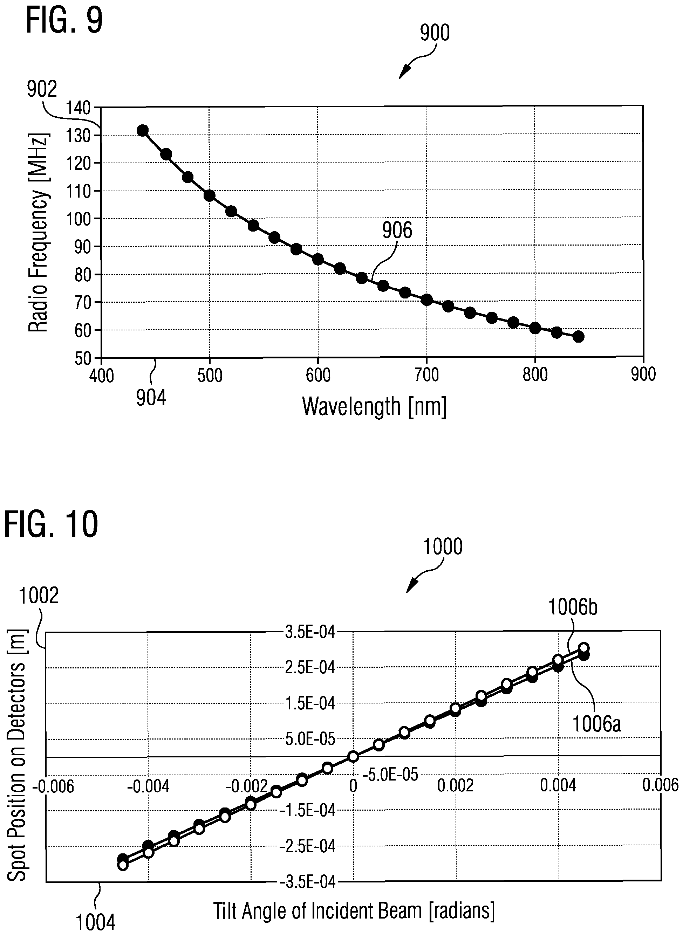

The graph 800 shown in Figure 8 is best understood when read together with Figure 9, which is a graph 900 with the radio frequency applied to the transducer 126 of the acousto-optical device 120 on the ordinate 902 and the wavelength deflected by the acousto-optical device 120 on the abscissa 904 for the detection arrangement 500 according to Figure 5. A curve 906 interpolates the radio frequencies. The radio frequency is given in MHz and the wavelength deflected by the acousto-optical device 120 is given in nanometers. As can be seen from Figure 9, to deflect shorter wavelengths, a higher radio frequency has to be applied to the transducer 126. Likewise, to deflect longer wavelengths, a lower radio frequency has to be applied to the transducer 126.

As can be seen from Figures 5 to 9, the separation between the focal spots 600 corresponding to wavelengths in the range of 640 nm to 840 nm is smaller than the separation between the focal spots 600 corresponding to wavelengths in the range of 440 nm to 640 nm. If the separation between the focal spots 600 corresponding to wavelengths in the range of 640 nm to 840 nm is not large enough to perform robust pixel reassignment, the cascaded detection arrangement 1400 comprising multiple detection arrangements 500 in series may be used. The cascaded detection arrangement 1400 is described below in more detail with reference to Figure 14.

Figure 10 is a graph 1000 with the relative positions of the focal spots 600 on the ordinate 1002 and the tilt angle of the incident detection light 118 relative to the optical axis on the abscissa 1004 for the detection arrangement 500 according to Figure 5. The relative position is given in meters and the tilt angle is given in radian. The position of the focal spot 600 corresponding to an angle of incident of 0 rad has been chosen as the reference for the relative position. The focal spots 600 correspond to a wavelength of 540 nm.

The amount of tilt depends on the amount of dislocation of the point-like source of the detection light 118 from the optical axis of the objective lens 104. The amount of tilt further depends on the optical properties, for example magnification, of the optical scanning microscope 100 between the sample 106 and the acousto-optical device 120. In Figure 10 it was assumed that the tilt angle of the incident detection light 118 entering into the acousto-optical device 120 varies in the range of -4.5 milli-radians to +4.5 milli-radians. A first curve 1006a interpolates the relative positions of the focal spots 600 on the first array detector 122a and a second curve 1006b interpolates the relative positions of the focal spots 600 on the second array detector 122b. As can be seen in Figure 10, the two curves are nearly identical (the second curve 1006b is slightly steeper), meaning that the focal spots 600 move in the same direction on the surfaces of the first and second array detectors 122a, 122b when the angle of incident changes.

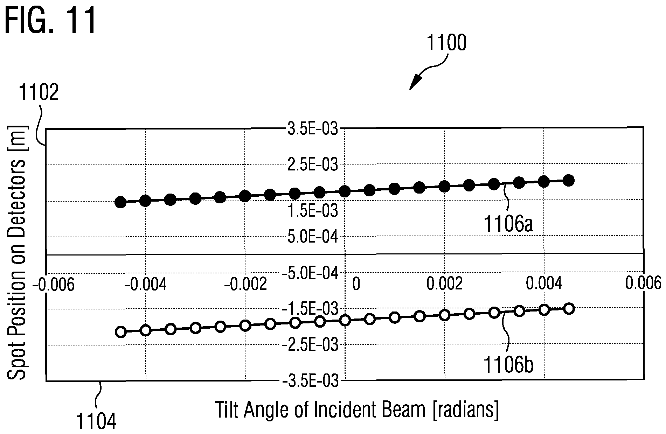

Figure 11 is another graph 1100 with the relative positions of the focal spots 600 on the ordinate 1102 and the tilt angle of the incident detection light 118 relative to the optical axis on the abscissa 1104 for the detection arrangement 500 according to Figure 5. Like in Figure 10, the relative position is given in meters and the tilt angle is given in radian. The position of the focal spot 600 corresponding to a wavelength of 540 nm and to an angle of incident of 0 rad has been chosen as the reference for the relative position. Contrary to Figure 10, in Figure 11 the focal spots 600 correspond to a wavelength of 440 nm.

A first curve 1106a interpolates the relative positions of the focal spots 600 on the first array detector 122a and a second curve 1106b interpolates the relative positions of the focal spots 600 on the second array detector 122b. As can be seen in Figure 11, the two curves are separated by about 0.3 mm in the y-direction. This distance is due to the fact that the angle enclosed by the zeroth-order beam and both the +1 and -1 diffraction order beams increases as the wavelength of the detection light 118 decreases. However, the gradient of both curves 1106a, 1106b is almost the same, which reflects the fact that when the angle of incident changes the focal spots 600 move in the same direction on the surfaces of the first and second array detectors 122a, 122b.

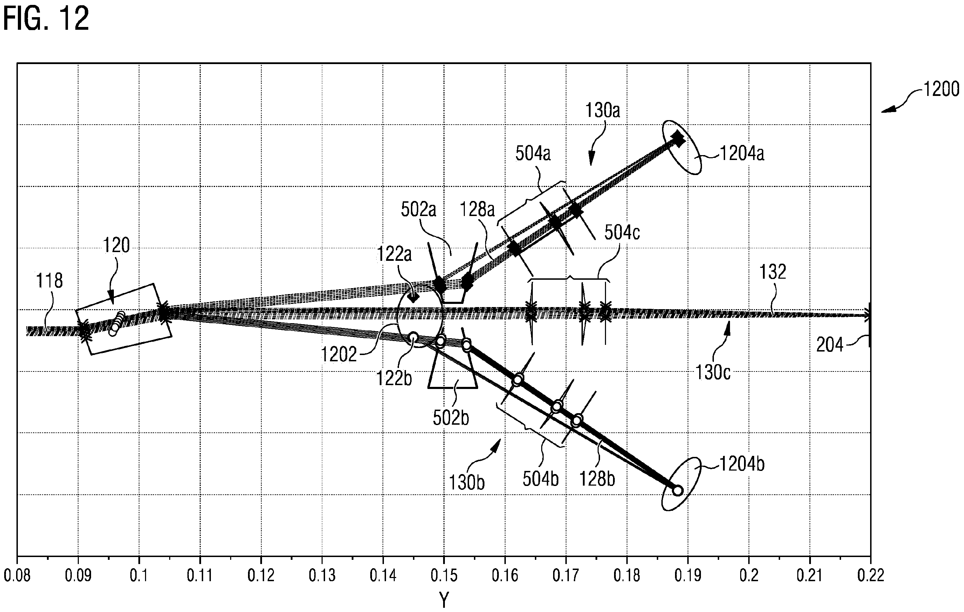

Figure 12 is a schematic top view of the detection arrangement 1200 according to another embodiment. The detection arrangement 1200 according to Figure 12 is distinguished from the detection arrangement 500 according to Figure 5 in that the two array detectors 122a, 122b are formed by the surface of a single detector element 1202.

While in the embodiment shown in Figure 5, the two array detectors 122a, 122b are independent elements of the detection arrangement 500, in the present embodiment, the two array detectors 122a, 122b are formed by the single detector element 1202. More specifically, the first array detector 122a is formed by a first region of the detector element 1202 and the second array detector 122b is formed by a second region of the detector element 1202. In order to direct the first part 128a of the detection light 118 onto the first region of the detector element 1202, the first beam path 130a comprises a first reflective element 1204a. Likewise, the second beam path 130b comprises a second reflective element 1204b that directs the second part 128b of the detection light 118 onto the second region of the detector element 1202.

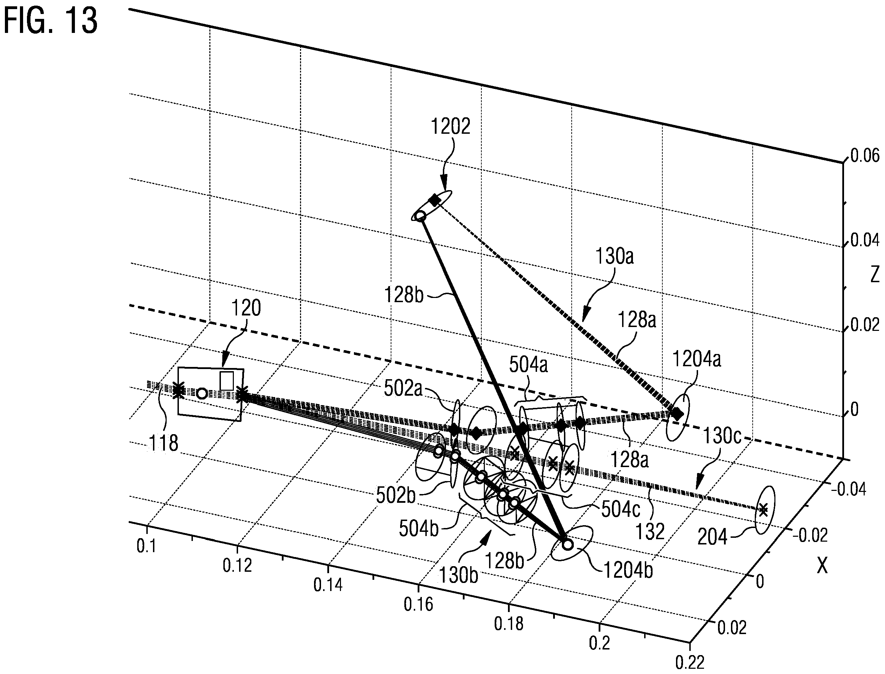

The detector element 1202 is exemplary arranged atop the two beam deflecting elements. This can be seen in Figure 13, which is a schematic perspective view of the detection arrangement 1200 according to Figure 12. This arrangement of elements is particularly compact.

Figure 14 is a schematic view of the cascaded detection arrangement 1400 according to an embodiment. The cascaded detection arrangement 1400 comprises a first detection arrangement 1402 and a second detection arrangement 1404 arranged in series.

The first detection arrangement 1402 comprises a first acousto-optical device 1406, the first array detector 122a, and the second array detector 122b. The detection light 118 is received by the first detection arrangement 1402 via the first acousto-optical device 1406, which directs the first part 128a of the detection light 118 into the first beam path 130a, the second part 128b of the detection light 118 into the second beam path 130b, and the remaining part 132 of the detection light 118 into the third beam path 130c. Like the detection arrangement 200 described above with reference to Figure 2, the first and second beam paths 130a, 130b of the first detection arrangement 1402 comprise the focusing elements 202a, 202b, and the array detectors 122a, 122b. However, the first detection arrangement 1402 is only exemplary shown as being similar to the detection arrangement 200 according to Figure 2. The first detection arrangement 1402 may be any of the detection arrangements 102, 200, 300, 500, 1200 described above with reference to Figure 1 to 3, 5, 12 and 13, i.e. any embodiment that does not comprise the beam dump 402 arranged in the third beam path 130c.

The second detection arrangement 1404 is arranged in the third beam path 130c of the first detection arrangement 1402 and comprises a second acousto-optical device 1408, a third array detector 1410c, a fourth array detector 1410a, and a fifth array detector 1410b. The second detection arrangement 1404 receives the remaining part 132 of the detection light 118 from the first detection arrangement 1402. In other words, in the second detection arrangement 1404, the remaining part 132 of the detection light 118 takes on the role of the detection light 118 in the first detection arrangement 1402.

The remaining part 132 of the detection light 118 is received by the second detection arrangement 1404 via the second acousto-optical device 1408, which directs a fourth part 1412a of the detection light 118 into a fourth beam path 1414a and a fifth part 1412b of the detection light 118 into a fifth beam path 1414b. What is now left of the detection light 118, i.e. the detection light 118 minus the first to forth parts 128a, 128b, 1412a, 1412b, will be called the second remaining part 1416 of the detection light 118 and is directed into a sixth beam path 1414c by the second acousto-optical device 1408.

Like the first detection arrangement 1402, the fourth and fifth beam paths 1414a, 1414b of the second detection arrangement 1404 comprise a focusing element 1418a, 1418b, and an array detector 1410a, 1410b each. The sixth beam path also comprises a focusing element 1418c, and an array detector 1410c. Thus, the second detection arrangement 1404 is similar to the detection arrangement 1200 according to Figure 2. However, the second detection arrangement 1404 may also be any of the detection arrangements 102, 200, 300, 400, 500, 1200 described above with reference to Figure 1 to 13.

State-of-the-art acousto-optical devices, which operate in the near-UV, visible and near-IR wavelengths, can influence up to eight different wavelength ranges. This means that by applying up to eight different radio frequencies to the transducer 126, up to eight different wavelength ranges may be diffracted onto one of the two array detectors 122a, 122b. The cascaded detection arrangement 1400 expands this capability by directing the remaining detection light 132 into the second detection arrangement 1404, allowing up to eight additional wavelength ranges to be extracted from the detection light 118 that would otherwise have been lost.

The cascaded detection arrangement 1400 may further be used to increase the separation of the focal spots 600 for longer wavelengths (c.f. Figures 5 to 9). Specifically, the first detection arrangement 1402 of the cascaded detection arrangement 1400 may comprise beam deflecting elements comprising dispersing prisms and may be used to detect wavelengths in the range of 440 nm to 640 nm. The second detection arrangement 1404 of the cascaded detection arrangement 1400 may be used to detect wavelengths in the range of 640 nm to 840 nm. The second detection arrangement 1404 may comprise beam deflecting elements comprising dispersing prisms, which are different from the dispersing prisms used in the first detection arrangement 1402 in terms of their apex angle and/or glass, to ensure that the dispersion in the second detection arrangement 1404 is larger. This ensures that the separation of wavelengths on to the array detectors 122a, 122b of the second detection arrangement 1404 enables a better performance of the pixel reassignment procedure.

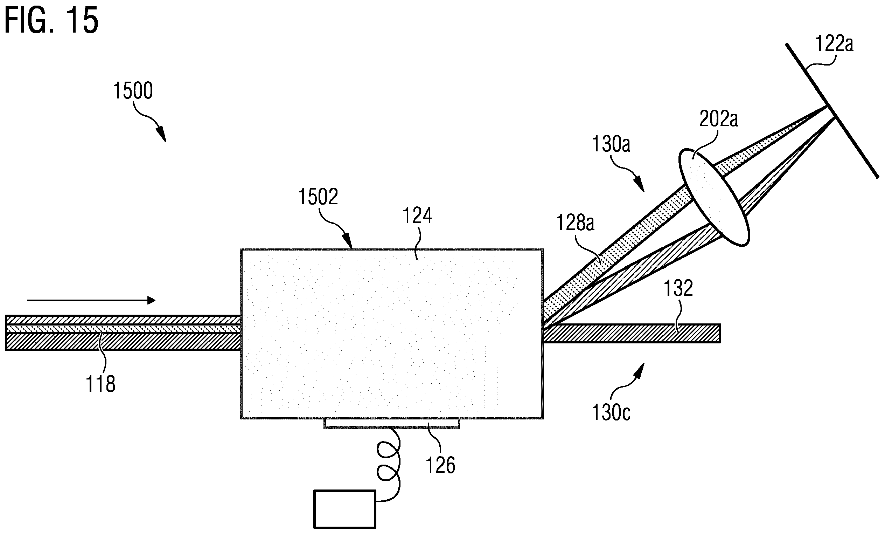

Figure 15 shows in a schematic view a detection arrangement 1500 according to another embodiment. The detection arrangement 1500 is distinguished from the detection arrangement 100 according to Figure 1 in that the acousto-optical device 1502 is configured to only generate the first part 128a of the detection light 118 which is received by the array detector 122a. There is no second part 128b of the detection light 118 and no second array detector 122b. The remaining part of the detection light which is not diffracted by the acousto-optical device 120 is directed into the third beam path 130c. Besides these differences, the functionality of the embodiment according to Figure 15 is comparable to the embodiment shown in Figure 1.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Optical scanning microscope
- 102: Detection arrangement
- 104: Objective lens
- 106: Sample
- 108: Sample space
- 110: Excitation light source
- 112: Scanning unit
- 114: Main beam splitter
- 116: Excitation light
- 118: Detection light
- 120: Acousto-optical device
- 122a, 122b: Array detector
- 124: Acousto-optical medium
- 126: Transducer
- 128a, 128b: Part of the detection light
- 130a, 130b, 130c: Beam path
- 132: Part of the detection light
- 134: Control unit
- 200: Detection arrangement
- 202a, 202b, 202c: Focusing element
- 204: Detector element
- 300: Detection arrangement
- 302: Detector element
- 304: Pinhole
- 400: Detection arrangement
- 402: Pinhole
- 500: Detection arrangement
- 502a, 502b: Beam deflecting element
- 504a, 504b, 504c: Focusing element
- 600: Focalspot
- 602a, 602b: Diagonal
- 700: Graph
- 702: Ordinate
- 704: Abscissa
- 706a, 706b: Curve
- 800: Graph
- 802: Ordinate
- 804: Abscissa
- 806a, 806b: Curve
- 900: Graph
- 902: Ordinate
- 904: Abscissa
- 906: Curve
- 1000: Graph
- 1002: Ordinate
- 1004: Abscissa
- 1006a, 1006b: Curve
- 1100: Graph
- 1102: Ordinate
- 1104: Abscissa
- 1106a, 1106b: Curve
- 1200: Detection arrangement
- 1202: Detector element
- 1204a, 1204b: Reflective element
- 1400: Cascaded detection arrangement
- 1402: Detection arrangement
- 1404: Detection arrangement
- 1406, 1408: Acousto-optical device
- 1410a, 1410b, 1410c: Array detector
- 1412a, 1412b: Part of the detection light
- 1414a, 1414b, 1414c: Beam path
- 1416: Part of the detection light
- 1418a, 1418b, 1418c: Focusing element
- 1500: Detection arrangement
- 1502: Acousto-optical device

## Claims

1. A detection arrangement (102, 200, 300, 400, 500, 1200, 1402, 1404) for an optical scanning microscope (100), the detection arrangement (102, 200, 300, 400, 500, 1200, 1402, 1404) comprising
a first beam path (130a) comprising a first array detector (122a);
an acousto-optical device (120, 1406, 1408) configured to receive descanned detection light (118), to direct a first part (128a) of the detection light (118) into the first beam path (130a),
wherein the first part of the detection light (118) comprises at least one selected wavelength range determined by at least one frequency of acoustic waves generated by a transducer (126) of the acousto-optical device (120, 1406, 1408); and
a control unit (134) configured to control the transducer (126) of the acousto-optical device (120, 1406, 1408) for determining the at least one selected wavelength range.

2. The detection arrangement (200, 300, 500, 1200, 1404) according to claim 1 further comprising a second beam path (130b) comprising a second array detector (122b), wherein the acousto-optical device (120, 1406, 1408) is configured to direct a second part (128b) of the detection light (118) into the second beam path (130b), and wherein the second part of the detection light (118) comprises the at least one selected wavelength range.

3. The detection arrangement (200, 300, 500, 1200, 1404) according to claim 1 or 2, wherein a remaining part (132) of the detection light (118) is directed into a third beam path (130c).

4. The detection arrangement (300) according to claim 3, wherein the third beam path (130c) comprises a detector element (204, 302), in particular a third array detector (204) or a non-array-detector (302), or wherein the third beam path (130c) comprises a beam dump (402).

5. The detection arrangement (300) according to claim 4, wherein the third beam path (130c) comprises a pinhole (304) arranged before the detector element (302).

6. The detection arrangement (200, 300, 500, 1200, 1404) according to one of the claims 4 or 5, wherein the detector element (204, 302) is a spectrally resolving detector element.

7. The detection arrangement (XXX) according to any one of the preceding claims, wherein a pinhole (XXX) is arranged in front of the acousto-optical device (120, 1406, 1408).

8. The detection arrangement (500) according to any one of the preceding claims, wherein the first beam path (130a) comprises at least one first beam deflecting element (502a), in particular a first dispersive element configured to spectrally separate the first part (128a) of the detection light (118); and/or wherein the second beam path (130b) comprises at least one second beam deflecting element (502b), in particular a second dispersive element configured to spectrally separate the second part (128b) of the detection light (118).

9. The detection arrangement (500) according to claim 8, wherein at least one of the first dispersive element and the second dispersive element comprise at least one dispersing prism.

10. The detection arrangement (1200) according to any one of the preceding claims, comprising a detector element (1202) having a first region forming at least part of the first array detector (122a), and a second region forming at least part of the second array detector (122b); wherein the first beam path (130a) comprises at least one first reflective element configured to direct the first part (128a) of the detection light (118) onto the first region of the detector element (1202); and wherein the second beam path (130b) comprises at least one second reflective element configured to direct the second part (128b) of the detection light (118) onto the second region of the detector element (1202)

11. The detection arrangement (200, 300, 400, 500, 1200, 1402, 1404) according to any one of the preceding claims, wherein the first beam path (130a) comprises at least one first focusing element (202a, 504a) configured to focus the first part (128a) of the detection light (118) onto the first array detector (122a); and/or wherein the second beam path (130b) comprises at least one second focusing element (202b, 504b) configured to focus the second part (128b) of the detection light (118) onto the second array detector (122b).

12. A cascaded detection arrangement (1400), comprising at least two detection arrangements (102, 200, 300, 400, 500, 1200, 1402, 1404) according to any one of the claims 1 to 9, wherein the detection arrangements (102, 200, 300, 400, 500, 1200, 1402, 1404) are arranged in sequence, each detection arrangement (102, 200, 300, 400, 500, 1200, 1402, 1404) except a first detection arrangement (1402) being arranged in the third beam path (130c) of the preceding detection arrangement (102, 200, 300, 400, 500, 1200, 1404).

13. An optical scanning microscope (100), comprising
an excitation light source (110) configured to generate excitation light (116);
an objective lens (104) directed at a sample space (108) and configured to direct the excitation light (116) into the sample space (108) and to receive the detection light (118) from the sample space (108);
a scanning unit (112) arranged along a beam path between the excitation light source (110) and the objective lens (104) and configured to selectively direct the excitation light (116) into different regions of the sample space (108) via the objective lens (104);
the detection arrangement (102, 200, 300, 400, 500, 1200, 1402, 1404) according to any one of the claims 1 to 9 or the cascaded detection arrangement (1400) according to claim 10; and
a main beam splitter (114) configured to direct the excitation light (116) into the objective lens (104) via the scanning unit (112), and to direct the detection light (118) into the detection arrangement (102, 200, 300, 400, 500, 1200, 1402, 1404) or the cascaded detection arrangement (1400).

14. The optical scanning microscope (100) according to claim 13, wherein the main beam splitter (114) comprises at least one of an acousto-optical beam splitter and a dichroic beam splitter.

15. The optical scanning microscope (100) according to claim 13 or 14, wherein the excitation light source (110) comprises a super-continuum laser and/or multiple single-wavelength lasers.
